# FASCICULE DE BREVET EUROPEEN

(11) **EP 0 972 750 B1**
(45) Date de publication et mention de la délivrance du brevet: **22.10.2003**
(21) Numéro de dépôt: 99401768.9
(22) Date de dépôt: 15.07.1999
(51) Int. Cl.: C03B 5/02, C03B 5/00

(54) **Elaboration de matrices minérales par fusion par induction en creuset froid**
Herstellung von Mineralmatrizen durch Induktionsschmelzen in einem kalten Schmelzhafen
Making mineral matrices through induction melting in a cold pot

(30) Priorité: 16.07.1998 FR 9809090
(43) Date de publication de la demande: 19.01.2000
(73) Titulaire: Société Generale pour les Techniques Nouvelles SGN, 78180 Montigny-Le-Bretonneux (FR)
(72) Inventeur: Kalousdian, Philippe, 92130 Issy les Moulineaux (FR); Cantin, Patrick, 92200 Neuilly sur Seine (FR)
(74) Mandataire: Le Roux, Martine

(56) Documents cités:
- EP-A- 0 820 962
- EP-A- 0 847 061
- FR-A- 2 331 759

## Description

La présente invention concerne l'élaboration de matrices minérales par fusion par induction en creuset froid. Elle concerne plus précisément un procédé d'élaboration d'une matrice minérale par fusion, mis en oeuvre selon la méthode de fusion par induction directe en creuset froid, ladite méthode comprenant une étape de démarrage pour amorcer la fusion.

On propose, en fait, dans le cadre de la présente invention, une innovation à la mise en oeuvre de ladite méthode de fusion par induction directe en creuset froid ; méthode connue en elle-même. Cette innovation se situe au niveau du démarrage de ladite fusion.

Ladite méthode de fusion par induction directe en creuset froid, pour l'élaboration de matrices minérales, peut être mise en oeuvre dans différents contextes, et notamment dans celui de l'élaboration de matrices de verre. De telles matrices de verre interviennent plus particulièrement dans le cadre de procédés de vitrification de déchets radioactifs. La présente invention est spécialement décrite en référence à ce contexte. Elle n'est toutefois nullement limitée audit contexte.

Dans le procédé de vitrification de déchets radioactifs, lesdits déchets sont mélangés à du verre fondu au sein d'un creuset chauffé, notamment par induction. Ledit creuset est alimenté, en continu, en fritte de verre et en déchets.

Dans le procédé de fusion en creuset chaud, la puissance est transmise, par conduction, à la charge (verre fondu + déchets) au contact avec la paroi du creuset. Ladite paroi est elle-même chauffée par effet Joule ; effet Joule produit par le passage de courants de Foucault induits dans ladite paroi. On a décrit, dans la demande EP-A-0 196 809, un dispositif convenant pour la mise en oeuvre d'un tel procédé. A ce jour, un tel procédé est mis en oeuvre dans les ateliers de vitrification de la COGEMA (Compagnie Générale des Matières Nucléaires) à La Hague.

Dans le plus récent procédé de fusion par induction directe en creuset froid, la paroi du creuset est refroidie par un courant d'eau de refroidissement, circulant dans des canaux ménagés à cet effet dans l'épaisseur de ladite paroi. La puissance est directement transmise à la charge (verre fondu + déchets) par effet Joule, effet Joule produit par la circulation de courants de Foucault directement induits dans le verre fondu, conducteur électrique en cet état (fondu).

Ainsi, pour le démarrage d'un tel procédé de fusion, par induction directe en creuset froid, ledit creuset froid renfermant (pour ledit démarrage) du verre froid, le chauffage ne peut être obtenu par induction dans ledit verre froid, non conducteur en cet état. On doit donc, a priori, avoir recours à des moyens de chauffage complémentaires, pour ledit démarrage.

On a préconisé d'introduire dans le lit de verre froid (non conducteur) un élément conducteur électrique (du type anneau métallique ou copeaux métalliques) dans lequel les courants induits peuvent circuler en provoquant par effet Joule un réchauffage progressif jusqu'à l'amorce de la combustion du métal, qui se propage de proche en proche en entraînant la fusion du verre environnant, verre en fusion dans lequel des courants induits se développent à leur tour progressivement, jusqu'à la fusion complète dudit verre. Dans un environnement radioactif, l'introduction d'un tel élément conducteur électrique est susceptible de soulever quelques difficultés, mécaniques principalement... On a décrit un procédé de ce type dans la demande de brevet EP-A-0 640 992: une partie des déchets à vitrifier constituant eux-mêmes l'élément conducteur électrique et une autre partie de ceux-ci consistant en des substances vitreuses...

On a également envisagé, pour le démarrage d'un procédé de fusion par induction directe en creuset froid, d'avoir recours à des moyens de chauffage différents des moyens de chauffage inductifs : brûleur(s), micro-ondes, électrodes, arc ...

L'intervention de tels moyens de chauffage complémentaires pose aussi des problèmes :
- lesdits moyens encombrent l'intérieur et/ou l'extérieur du creuset froid,
- ils compliquent les procédures d'exploitation et de maintenance dudit creuset froid.

Les deux approches présentées ci-dessus requièrent, en tout état de cause, des aménagement particuliers au niveau de la structure du creuset froid et de son exploitation.

Confrontée à ce problème technique du démarrage des procédés de vitrification de déchets radioactifs par fusion, par induction directe en creuset froid, et plus généralement au problème technique du démarrage de la fusion par induction directe en creuset froid, la Demanderesse propose, dans le cadre de la présente invention, une solution originale. Celle-ci est basée sur l'intervention préalable, au sein du creuset froid, d'un liquide conducteur.

Le procédé de l'invention - procédé d'élaboration d'une matrice minérale par fusion, mis en oeuvre selon la méthode de fusion par induction directe en creuset froid et incluant une étape de démarrage originale, pour amorcer ladite fusion - comprend, de façon caractéristique, au cours de ladite étape de démarrage, la constitution, dans ledit creuset froid, d'une charge minérale conductrice, par introduction d'éléments constitutifs de ladite matrice, dans un bain liquide conducteur, porté par induction à une température convenable. Grâce à la montée en température dudit bain liquide conducteur, il est possible, en ne faisant intervenir que les moyens de chauffage inductifs, de constituer directement dans le creuset froid une charge minérale conductrice. Ce résultat ne peut être obtenu que si ledit liquide conducteur intervenant est liquide et conducteur, sur une plage de température relativement large entre une température θ₁ inférieure à 600°C, avantageusement comprise entre 100 et 500°C, et une température θ₂ au moins égale à la température à laquelle les éléments constitutifs de la matrice fondent pour générer ladite matrice.

On conçoit l'intérêt d'une telle plage de température, large, dans la mesure où l'on vise :
- d'une part, à obtenir aisément et rapidement ledit liquide conducteur dans le creuset froid. Cette condition fixe la valeur inférieure θ₁ de ladite plage de température. On a vu que, raisonnablement, θ₁ est inférieure à 600°C, qu'elle est avantageusement comprise entre 100 et 500°C. Plus ladite température θ₁ est basse, plus il est aisé de mettre en oeuvre le démarrage du procédé selon l'invention ;
- d'autre part, à fondre dans ledit liquide conducteur les éléments constitutifs de la matrice ajoutés ; une telle fusion devant être opérée avant la dégradation et/ou l'évaporation dudit liquide conducteur. Cette condition fixe la valeur supérieure θ₂ de ladite plage de température. On comprend aisément que cette valeur θ₂ est fonction de la nature des éléments constitutifs intervenant, de la matrice minérale en fusion recherchée. On verra plus loin que le procédé de l'invention est tout particulièrement adapté pour élaborer des matrices de verre, d'émail et de céramique. On peut ici indiquer, de façon illustrative, que, dans le cadre de l'élaboration d'une matrice de verre en fusion, θ₂ est au moins égale à 1 000°C, avantageusement au moins égale à 1 300°C. A de telles températures, il est tout à fait possible d'élaborer un verre en fusion à partir de ses éléments constitutifs, du type oxydes minéraux : SiO₂, B₂O₃, CaO, ...

Selon l'invention, pour démarrer le procédé de fusion, on fait donc appel à un bain d'un tel liquide conducteur sur toute ladite plage de température : [θ₁ - θ₂]. Dans ledit bain, soumis à une puissance de chauffe adéquate, on ajoute les (ou des) éléments constitutifs de la matrice attendue - éléments qui fondent jusqu'à obtenir la charge minérale conductrice souhaitée.

Selon différentes variantes de mise en oeuvre :
- ladite charge est constituée desdits éléments constitutifs ajoutés ; ou
- ladite charge est constituée desdits éléments constitutifs ajoutés et d'autres éléments constitutifs qui se trouvaient initialement dans le bain de liquide conducteur ; ou
- ladite charge est constituée desdits éléments constitutifs ajoutés et d'au moins un autre élément constitutif qui est directement obtenu à partir dudit liquide conducteur ; ou encore
- ladite charge est constituée desdits éléments constitutifs ajoutés, d'autres éléments constitutifs qui se trouvaient initialement dans le bain de liquide conducteur et enfin d'au moins un autre élément constitutif qui est obtenu à partir dudit liquide conducteur.

Selon les deux premières variantes précisées ci-dessus, ledit liquide conducteur n'intervient que pour l'amorçage du procédé, il assure ledit amorçage mais constitue une pollution à la charge minérale conductrice constituée. Il est alors nécessaire de se débarrasser de celui-ci, de procéder à une dilution par remplissages/vidanges successifs ou par remplissage/vidange mis en oeuvre en continu. Ceci est explicité plus avant dans le présent texte.

Selon les deux dernières variantes précisées ci-dessus, ledit liquide conducteur intervient à la fois pour l'amorçage dudit procédé ainsi que dans l'élaboration de la (première) charge minérale conductrice fondue. On préfère tout particulièrement mettre en oeuvre le procédé de l'invention avec un tel bain de liquide conducteur ; ledit liquide conducteur, précurseur d'au moins un élément constitutif de la matrice, étant alors avantageusement utilisé pour élaborer la charge minérale conductrice attendue. Dans de telles conditions, tout ce qui a été introduit dans le creuset froid est utilisé pour constituer la charge minérale conductrice. Il n'est pas nécessaire de mettre en oeuvre de vidange et il est tout à fait possible d'introduire conjointement des éléments constitutifs de la matrice et des éléments à immobiliser dans ladite matrice (par exemple, des déchets à immobiliser dans une matrice de verre). Ceci est également explicité en détail plus avant dans le présent texte.

On a parlé de l'intervention, dans le creuset froid, d'un bain d'un liquide conducteur. Il n'est toutefois nullement exclu du cadre de l'invention de faire intervenir conjointement plusieurs liquides conducteurs dans ledit bain, que l'on peut, de manière générale, qualifier de bain d'amorçage. Dans ce contexte, il est évidemment impératif que les différents liquides intervenant soient compatibles, que leur mélange reste liquide et conducteur sur toute la plage de température : [θ₁ - θ₂]. Dans la présente description et les revendications annexées, l'expression "un liquide conducteur" se lit donc " un unique liquide conducteur ou un mélange d'au moins deux liquides conducteurs ".

Le bain de liquide conducteur, présent dans le creuset froid, permet, selon l'invention, l'élaboration directe d'une charge minérale conductrice, sans faire appel à des moyens de chauffage, au sein dudit creuset froid, autres que les moyens de chauffage inductifs présents.

Ledit bain, dans ledit creuset froid, peut être élaboré selon différentes variantes.

Selon une première variante, le liquide conducteur est généré, in situ, dans ledit creuset froid, qui a été préalablement alimenté en une composition adéquate, précurseur dudit liquide conducteur. Ainsi peut-on avoir alimenté ledit creuset froid en une solution aqueuse d'un sel adéquat ou en une pâte dudit sel à faible teneur en eau. Ladite solution ou pâte, chauffée par induction, sèche dans un premier temps. Le sel obtenu, toujours chauffé par induction, fond alors et génère un bain de sel fondu ; ledit sel fondu convenant à titre de liquide conducteur au sens de l'invention. En fait, il est possible de faire intervenir un sel ou un mélange de sels.

Selon une seconde variante, le liquide conducteur est préparé à l'extérieur du creuset froid et est transféré dans ledit creuset froid pour générer ledit bain, utile à l'amorçage de la fusion. Le transfert dudit liquide conducteur est mis en oeuvre dans au moins une canalisation adéquate, généralement chauffée, calorifugée et résistante à la corrosion ... Selon cette variante, ledit creuset froid est alimenté directement en ledit liquide conducteur. Ainsi ledit creuset froid peut-il être alimenté directement en un sel fondu ou mélange de sels fondus convenant à titre de liquide conducteur au sens de l'invention.

Comme indiqué ci-dessus, le liquide conducteur qui intervient, selon l'invention, dans l'amorçage du procédé de fusion, peut avantageusement consister en un sel fondu ou mélange de sels fondus ; sel fondu ou mélange qui bien évidemment répond aux exigences requises; i.e. qui demeure liquide et conducteur dans la plage de température [θ₁ - θ₂], définie ci-dessus.

Ledit sel fondu ou mélange de sels fondus, notamment introduit dans le creuset froid à l'état de sel fondu ou mélange de sels fondus, de pâte ou en solution, consiste avantageusement en un sel alcalin fondu ou un mélange de sels alcalins fondus.

Il peut notamment s'agir d'un hydroxyde tel l'hydroxyde de lithium (LiOH), l'hydroxyde de sodium ou soude (NaOH) ou l'hydroxyde de potassium ou potasse (KOH); d'un nitrate; d'un nitrite ou d'un mélange de ces sels.

Dans le cadre d'une variante préférée du procédé de l'invention, on a vu que le liquide conducteur intervient à la fois pour l'amorçage et pour l'élaboration de la première charge minérale conductrice fondue, en tant que précurseur d'au moins un élément constitutif de la matrice attendue. Pour la mise en oeuvre de ladite variante préférée, il convient donc que ledit liquide conducteur soit un précurseur d'au moins un élément constitutif de ladite matrice. L'intervention de tels liquides conducteurs, précurseurs d'au moins un élément constitutif de ladite matrice, est donc largement préconisée dans le cadre de la présente invention. Ainsi préconise-t-on tout particulièrement, dans le cadre de la mise en oeuvre du procédé de l'invention pour élaborer une matrice de verre minéral, l'utilisation d'un liquide conducteur, contenant du sodium, précurseur de Na₂O (élément constitutif du verre élaboré) et notamment celle de la soude (NaOH), à titre de liquide conducteur, pour constituer la charge d'amorçage au sens de l'invention. On peut également dans ce contexte (d'élaboration d'une matrice de verre) avantageusement faire intervenir, à titre de liquide conducteur précurseur, un mélange eutectique nitrate et nitrite de sodium.

Dans l'hypothèse de l'intervention d'un tel liquide conducteur, précurseur d'au moins un élément constitutif de la matrice attendue, on met avantageusement en oeuvre le procédé de l'invention comme suit : au cours de l'étape de démarrage, dans le bain de liquide conducteur (présent dans le creuset froid), dont la température est augmentée progressivement (grâce au chauffage par induction), on ajoute les éléments constitutifs complémentaires de ladite matrice (on tient ainsi compte de l'(des) élément(s) de ladite matrice apporté(s) par ledit liquide conducteur, voire également du ou des éléments constitutifs de ladite matrice qui ont pu être introduits préalablement dans ledit liquide conducteur).

Dans l'hypothèse de l'intervention d'un tel liquide conducteur, précurseur d'au moins un élément constitutif d'une matrice de verre attendue (contenant par exemple du sodium, précurseur de Na₂O), pour immobiliser des déchets radioactifs, on ajoute lesdits déchets radioactifs, en même temps ou après, avantageusement en même temps, que lesdits éléments constitutifs complémentaires de la matrice (de verre). Lesdits déchets peuvent ainsi intervenir dans la première charge de verre constituée à l'issue de ladite étape de démarrage ou lors de la constitution de ladite première charge de verre.

Les éléments constitutifs complémentaires de la matrice sont généralement ajoutés progressivement, avantageusement dès le début de la montée en température du bain de liquide conducteur. Il n'est toutefois nullement exclu de les ajouter audit bain porté à une température voisine ou égale à θ₂.

On a vu que cette variante de mise en oeuvre du procédé de l'invention est particulièrement préférée. Le liquide conducteur présent pour amorcer la fusion est consommé, valorisé, au cours de celle-ci. Il ne constitue pas un polluant à la première charge minérale conductrice ainsi générée. Son intervention n'impose pas la mise en oeuvre d'une quelconque vidange (rinçage).

La première charge minérale conductrice, ainsi obtenue rapidement à l'issue d'une telle mise en oeuvre de l'étape de démarrage de la fusion, peut alors être récupérée. On peut notamment couler en conteneur une charge de verre ainsi constituée, renfermant des déchets radioactifs. On veille toutefois à conserver dans le creuset froid, un talon de charge chaud, conducteur. Ledit talon est apte à assurer, pour la charge suivante le rôle que le bain liquide conducteur a assuré pour la première charge. A l'issue de la mise en oeuvre de l'étape de démarrage, on peut ainsi traiter successivement n charges.

Dans l'hypothèse de l'intervention d'un liquide conducteur «polluant», non précurseur d'au moins un élément constitutif de la matrice attendue, on doit prévoir un autre mode de mise en oeuvre du procédé de l'invention. Un tel autre mode de mise en oeuvre est a priori moins intéressant ... Il demeure toutefois intéressant vis-à-vis des procédés de démarrage de l'art antérieur. On note ici qu'un tel autre mode de mise en oeuvre peut, toutefois, pour des raisons diverses et à titre exceptionnel, être aussi mis en oeuvre avec un liquide conducteur non polluant, précurseur d'au moins un élément constitutif de la matrice attendue. Dans une telle hypothèse, la fonction précurseur dudit liquide conducteur n'est pas valorisée.

Un tel autre mode de mise en oeuvre du procédé de l'invention comprend, dans le bain de liquide conducteur, dont la température est augmentée progressivement, l'ajout des éléments constitutifs de la matrice attendue et la poursuite de cet ajout, en continu ou en discontinu, auquel on associe respectivement une vidange partielle en continu ou des vidanges partielles en discontinu, jusqu'à l'obtention d'une charge minérale fondue adéquate (« non polluée »).

Si ladite charge minérale ainsi préparée est une charge de verre, destinée à immobiliser des déchets radioactifs, on conçoit que lesdits déchets sont introduits, en son sein, à l'issue de sa préparation.

Dans le cadre de cet autre mode de mise en oeuvre, on doit faire intervenir, à fond perdu, un certain volume de matrice, pour diluer le polluant.

Ledit autre mode de mise en oeuvre peut se décliner, principalement, selon deux variantes, explicitées ci-après.

Selon une première variante : au cours de l'étape de démarrage, dans le bain de liquide conducteur (présent dans le creuset froid), dont la température est augmentée progressivement (grâce au chauffage par induction), on ajoute les éléments constitutifs de la matrice (tous les éléments constitutifs de ladite matrice, en général progressivement, éventuellement en une ou plusieurs charges, de sorte que l'on peut parfois considérer que des éléments constitutifs complémentaires de ladite matrice sont ajoutés dans un bain liquide conducteur qui en contient déjà...). A l'issue de cette élaboration de la première charge, on vidange ladite première charge polluée, partiellement, afin de garder un talon permettant de poursuivre le chauffage par induction. On recommence ensuite à alimenter en éléments constitutifs de la matrice, assurant ainsi la dilution du polluant présent dans le talon. On reconduit le cycle vidange/remplissage jusqu'à ce que la teneur en polluant soit jugée acceptable.

Si une charge de verre conductrice est ainsi préparée, on peut alors y introduire des déchets radioactifs à immobiliser.

Selon une seconde variante : au cours de l'étape de démarrage, dans le bain de liquide conducteur (présent dans le creuset froid), dont la température est augmentée progressivement (grâce au chauffage par induction), on ajoute les éléments constitutifs de la matrice (tous les éléments constitutifs de ladite matrice, en général progressivement, éventuellement en une ou plusieurs charges, de sorte que l'on peut parfois considérer que des éléments constitutifs complémentaires de ladite matrice sont ajoutés dans un bain liquide conducteur qui en contient déjà ...) tout en vidangeant, partiellement, en continu, le creuset froid de sa charge ; charge ainsi constituée dudit liquide conducteur et de ladite matrice fondue, dont la composition est variable (puisqu'elle varie de celle dudit liquide conducteur (« pur ») vers celle finale de ladite matrice fondue (« sans trace » de liquide conducteur)). On poursuit cette addition et cette vidange partielle jusqu'à obtenir dans le creuset froid une charge dont la teneur en polluant est jugée acceptable. On stoppe alors ladite addition et ladite vidange.

Si une charge de verre conductrice est ainsi préparée, on peut alors y introduire des déchets radioactifs à immobiliser.

Selon ce mode de mise en oeuvre, le liquide conducteur (« polluant »), utile à l'amorçage, doit être évacué du creuset froid. Il est évacué progressivement, après avoir exercé sa fonction: celle de permettre la fusion des éléments constitutifs de la matrice ajoutés. Cette élimination de «l'amorceur» est d'une mise en oeuvre plus lourde, plus longue ... Elle entraîne une perte d'un certain volume de matrice. Toutefois, elle rend possible le démarrage de la fusion sans faire appel à des moyens de chauffage complémentaires, différents des moyens inductifs. Elle est aussi mis en oeuvre avec profit pour séparer deux campagnes de production de matrices minérales très différentes.

La première charge minérale conductrice, ainsi obtenue à l'issue d'une telle mise en oeuvre de l'étape de démarrage de la fusion, peut alors être récupérée. On peut notamment couler en conteneur, une charge de verre, ainsi constituée, renfermant des déchets radioactifs. Comme indiqué précédemment, on veillera à conserver un fond de ladite charge pour amorcer la fusion de la seconde charge et ainsi de suite.

Un creuset froid comprend un système électrique de chauffage par induction apte à fonctionner dans un certain domaine d'impédance, appelé domaine de fonctionnement. L'impédance aux bornes de l'inducteur dépend, pour une géométrie du creuset donnée, de la résistivité et du volume de la charge.

Quelle que soit la variante de mise en oeuvre du procédé de l'invention, il convient donc que le liquide conducteur intervienne initialement en une quantité telle, au vu de sa résistivité, que l'impédance résultant aux bornes de l'inducteur appartienne au domaine de fonctionnement.

L'amorçage de la fusion, avec ledit liquide conducteur, ne doit pas nécessiter un élargissement trop important du domaine de fonctionnement.

Avantageusement, on vise donc à ce que le bain de liquide conducteur constitue une charge équivalente, quasi-identique, du point de vue du procédé de chauffage par induction, à la charge minérale conductrice en fusion, à la température nominale du procédé de fusion.

L'homme du métier, à la considération de la description ci-dessus et des exemples ci-après, n'aura aucune difficulté à comprendre le concept original du procédé de l'invention, à mettre en oeuvre celui-ci et à optimiser ladite mise en oeuvre.

Celui-ci n'aura pas manqué de saisir le grand intérêt du procédé de démarrage de l'invention, d'une mise en oeuvre aisée, qui ne fait pas appel à des moyens de chauffage complémentaires, qui n'impose pas non plus de grande modification au dispositif qui intervient classiquement. Ledit dispositif classique comprend principalement le creuset froid et le circuit de chauffage inductif; la bobine d'induction étant disposée autour dudit creuset froid. Ledit creuset froid est évidemment équipé de dispositif(s) d'introduction des éléments constitutifs de la matrice voire aussi d'éléments à immobiliser dans ladite matrice ainsi que d'un dispositif de coulée ...

Pour la mise en oeuvre du procédé de l'invention, on prévoit avantageusement un circuit spécifique d'amenée dans le creuset froid, du liquide conducteur ou d'un matériau précurseur dudit liquide conducteur (par exemple : une solution aqueuse ou une pâte d'un sel, susceptible de générer un sel fondu).

L'homme du métier a compris que le procédé de l'invention, avec étape de démarrage originale d'une méthode de fusion par induction en creuset froid, convient pour l'élaboration de tout type de matrice minérale et notamment pour l'élaboration de matrices minérales choisies parmi les matrices de verre, d'émail et de céramique. Lesdites matrices peuvent être élaborées pour elles-mêmes ou pour constituer des matrices d'enrobage, d'immobilisation... On a déjà indiqué que le procédé de l'invention est avantageusement mis en oeuvre pour l'élaboration de matrices de verre, destinées à immobiliser des déchets radioactifs. Il n'est toutefois nullement exclu de le mettre en oeuvre pour élaborer per se des matrices de verre, voire des matrices de verre destinées à immobiliser d'autres types de produits...

Le procédé de l'invention est illustré par les exemples ci-après, dans le contexte de la vitrification de déchets radioactifs dans des matrices de verre.

### Exemple 1

Le procédé de l'invention est mis en oeuvre dans un creuset froid constitué d'une sole sectorisée, d'une virole sectorisée et d'un dôme au niveau de la structure duquel sont prévus des moyens d'introduction des produits (éléments constitutifs du verre nucléaire, déchets radioactifs). La sectorisation (agencement de canaux de refroidissement dans l'épaisseur desdites sole et virole) est mise en oeuvre de manière à laisser passer le champ électromagnétique et à éviter, autant que possible, les boucles de courant horizontales dans les parties métalliques engendrant une diminution du rendement. La virole sectorisée est entourée d'un inducteur.

Ledit creuset froid est conçu pour fonctionner avec une charge de verre de hauteur Hᵥₑᵣᵣₑ = 500 mm et de résistivité valant 5 Ω.cm à 1200°C.

L'étape de démarrage du procédé de vitrification de l'invention est la suivante :
- le creuset est alimenté, à 100°C, par de la soude hydratée, liquide, (25 % Na₂O, 75 % H₂O, % en poids), présentant à cette température de 100°C, une résistivité de 0,7 Ω.cm ;
- la transmission de puissance se fait sur 20 kg de ladite soude hydratée conductrice (ces 20 kg correspondant à environ 5 kg de Na₂O), dont la température augmente progressivement, jusqu'à obtention d'un mélange fondu NaOH-H₂O ;
- l'eau est éliminée graduellement au cours de l'augmentation de température, et la résistivité du liquide fondu diminue ;
- afin de compenser cette baisse de résistivité et de parvenir graduellement à une composition de verre nucléaire dans le creuset froid, on ajoute progressivement audit bain de soude 250 kg d'un mélange composé de :
   . SiO₂ 59 %
   . Al₂O₃ 4 %
   . B₂O₃ 18 %
   . Na₂O 7 %
   . CaO 5 %
   . ZrO₂ 1 %
   . ZnO 3 %
   . Li₂O 3 % (% en masse).

La composition dudit mélange a été ajustée pour tenir compte de l'apport in situ de Na₂O par la soude.

On obtient à l'issue de ces opérations une charge de verre de base.

Dans cette charge, on incorpore 70 kg d'effluents radioactifs à vitrifier. On obtient ainsi du verre radioactif de composition visée, de résistivité 5 Ω.cm à 1 200°C. Cette première charge de verre peut alors être coulée. On la coule tout en conservant, dans le fond du creuset froid, un talon de verre. Ledit talon permet de traiter la charge suivante et ainsi de suite.

### Exemple 2

Le procédé de l'invention est mis en oeuvre dans un creuset froid identique à celui de l'exemple 1.

L'étape de démarrage du procédé de vitrification de l'invention est la suivante :
- le creuset est alimenté en mélange eutectique de 14 kg de soude et potasse (51 % NaOH- 49 % KOH, % en moles; ce qui correspond à environ 5 kg de Na₂O), fondu à environ 170°C ;
- la transmission de puissance se fait sur cette quantité (ce bain) de liquide fondu, dont la température augmente progressivement, ce qui entraîne une diminution de sa résistivité ;
- afin de compenser cette baisse de résistivité et de parvenir graduellement à une composition de verre nucléaire dans le creuset froid, on ajoute progressivement audit bain de soude/potasse 250 kg d'un mélange composé de :
   . SiO₂ 59 %
   . Al₂O₃ 4 %
   . B₂O₃ 18 %
   . Na₂O 7 %
   . CaO 5 %
   . ZrO₂ 1 %
   . ZnO 3 %
   . Li₂O 3 % (% en masse).

La composition dudit mélange a été ajustée pour tenir compte de l'apport in situ de Na₂O par la soude ;
- on effectue une coulée de cette première charge inactive, contenant l'élément K indésirable. On veille à arrêter la coulée de sorte à conserver suffisamment de verre dans le creuset froid, afin de conserver un talon de verre chaud en fond de creuset ;
- on ajoute à nouveau du mélange précurseur de verre, présentant la composition pondérale ci-dessus ;
- on procède à autant de cycles coulée/remplissage que nécessaire, afin de diluer l'élément K, jusqu'à une teneur acceptable pour le verre élaboré.

On obtient, à l'issue de ladite étape de démarrage, du verre de composition de base visée.

70 kg d'effluents radioactifs sont alors incorporés à ce verre de base. On obtient ainsi du verre radioactif de composition visée, de résistivité de 5 Ω.cm à 1200°C. On peut alors procéder comme à l'exemple 1 (coulée de la charge avec constitution d'un talon de verre ; traitement de charges successives).

### Exemple 3

Le procédé de l'invention est mis en oeuvre dans un creuset froid identique à celui de l'exemple 1.

L'étape de démarrage du procédé de vitrification de l'invention est la suivante :
- le creuset est alimenté avec 13 kg d'un mélange eutectique nitrate et nitrite de sodium (environ 40 % NaNO₂ - 60 % NaNO₃, % en moles) fondu à environ 230°C ;
- la transmission de puissance se fait sur cette quantité (ce bain) de liquide fondu, dont la température augmente progressivement, ce qui entraîne une diminution de sa résistivité ;
- afin de compenser cette baisse de résistivité et de parvenir graduellement à une composition de verre nucléaire dans le creuset froid, on ajoute progressivement audit liquide fondu 250 kg d'un mélange composé de :
   . SiO₂ 59 %
   . Al₂O₃ 4 %
   . B₂O₃ 18 %
   . Na₂O 7 %
   . CaO 5 %
   . ZrO₂ 1 %
   . ZnO 3 %
   . Li₂O 3 % (% en masse).

Les nitrate et nitrite contenus dans le liquide en fusion se décomposent graduellement au cours de l'augmentation de température (au delà de 800°C), pour donner Na₂O.

La composition dudit mélange a été ajustée pour tenir compte de l'apport in situ de Na₂O par lesdits nitrate et nitrite de sodium.

On obtient, à l'issue de cette étape de démarrage, une charge de verre de base.

70 kg d'effluents radioactifs sont incorporés à cette charge de verre de base et l'on procède alors comme aux exemples 1 et 2.

## Revendications

1. Procédé d'élaboration d'une matrice minérale par fusion, mis en oeuvre selon la méthode de fusion par induction directe en creuset froid, ladite méthode comprenant une étape de démarrage pour amorcer la fusion, **caractérisé en ce qu'**au cours de ladite étape de démarrage, une charge minérale conductrice est générée, par introduction d'éléments constitutifs de ladite matrice, dans un bain d'un liquide conducteur, porté par induction à une température convenable, dans ledit creuset froid ; ledit liquide conducteur intervenant ayant la propriété d'être liquide et conducteur électrique entre une température θ₁ inférieure à 600°C, avantageusement comprise entre 100 et 500°C, et une température θ₂ au moins égale à la température à laquelle les éléments constitutifs de ladite matrice fondent pour générer ladite matrice.

2. Procédé selon la revendication 1, **caractérisé en ce que** ledit bain de liquide conducteur a été généré in situ dans ledit creuset froid.

3. Procédé selon la revendication 1, **caractérisé en ce que** ledit creuset froid a été directement alimenté en ledit liquide conducteur.

4. Procédé selon l'une quelconque des revendications 1 à 3, **caractérisé en ce que** ledit liquide conducteur est un sel fondu ou un mélange de sels fondus.

5. Procédé selon la revendication 4, **caractérisé en ce que** ledit liquide conducteur est un sel alcalin fondu ou un mélange de sels alcalins fondus.

6. Procédé selon la revendication 5, **caractérisé en ce que** ledit liquide conducteur consiste en un hydroxyde, un nitrate, un nitrite ou un mélange de ces sels.

7. Procédé selon l'une quelconque des revendications 1 à 6, **caractérisé en ce que** ledit liquide conducteur est précurseur d'au moins un élément constitutif de ladite matrice.

8. Procédé selon la revendication 7, **caractérisé en ce qu'**au cours de ladite étape de démarrage, dans ledit bain de liquide conducteur, dont la température est augmentée progressivement, on ajoute les éléments constitutifs complémentaires de ladite matrice.

9. Procédé selon l'une quelconque des revendications 1 à 7, **caractérisé en ce qu'**au cours de ladite étape de démarrage, dans ledit bain de liquide conducteur, dont la température est augmentée progressivement, on ajoute les éléments constitutifs de ladite matrice et on poursuit cet ajout, en continu ou en discontinu, en lui associant, respectivement, une vidange partielle en continu ou des vidanges partielles en discontinu, jusqu'à l'obtention de la matrice minérale attendue fondue.

10. Procédé selon l'une quelconque des revendications 1 à 9, **caractérisé en ce qu'**il est mis en oeuvre pour l'élaboration d'une matrice minérale choisie parmi les verres, les émaux et les céramiques.

11. Procédé selon l'une quelconque des revendications 1 à 10, **caractérisé en ce qu'**il est mis en oeuvre pour l'élaboration d'une matrice de verre.

12. Procédé selon la revendication 11, **caractérisé en ce qu'**il est mis en oeuvre dans le cadre d'un procédé de vitrification de déchets radioactifs.

13. Procédé selon l'une des revendications 11 ou 12, **caractérisé en ce que** ledit liquide conducteur contient du sodium, précurseur de Na₂O.

14. Procédé selon les revendications 8 et 12, **caractérisé en ce que** lesdits déchets radioactifs sont introduits, en même temps ou après, avantageusement en même temps, que les éléments constitutifs complémentaires de la matrice de verre.

15. Procédé selon les revendications 9 et 12, **caractérisé en ce que** lesdits déchets radioactifs sont introduits dans la matrice de verre attendue fondue.

## Patentansprüche

1. Verfahren zur Herstellung einer mineralischen Matrix durch Schmelzen, angewendet bei dem direkten Induktionsschmelzverfahren in einem kalten Schmelztiegel, das eine Anfahrstufe zur Einleitung der Schmelze umfasst, **dadurch gekennzeichnet, dass** im Verlaufe der Anfahrstufe eine elektrisch leitende mineralische Beschickung erzeugt wird durch Einführung der die Matrix aufbauenden Elemente in ein Bad eines flüssigen elektrischen Leiters, das in dem kalten Schmelztiegel durch Induktion auf eine geeignete Temperatur gebracht wird, wobei der verwendete flüssige elektrische Leiter die Eigenschaft hat, flüssig zu sein und elektrisch leitend zu sein zwischen einer Temperatur θ₁ unterhalb 600 °C, vorteilhaft zwischen 100 und 500 °C, und einer Temperatur θ₂, die mindestens gleich der Temperatur ist, bei der die die Matrix aufbauenden Elemente schmelzen, unter Bildung der genannten Matrix.

2. Verfahren nach Anspruch 1, **dadurch gekennzeichnet, dass** das Bad aus dem flüssigen elektrischen Leiter in dem kalten Schmelztiegel in situ erzeugt wurde.

3. Verfahren nach Anspruch 1, **dadurch gekennzeichnet, dass** der kalte Schmelztiegel mit dem flüssigen elektrischen Leiter direkt beschickt worden ist.

4. Verfahren nach einem der Ansprüche 1 bis 3, **dadurch gekennzeichnet, dass** der flüssige elektrische Leiter ein geschmolzenes Salz oder eine Mischung von geschmolzenen Salzen ist.

5. Verfahren nach Anspruch 4, **dadurch gekennzeichnet, dass** der flüssige elektrische Leiter ein geschmolzenes Alkalisalz oder eine Mischung von geschmolzenen Alkalisalzen ist.

6. Verfahren nach Anspruch 5, **dadurch gekennzeichnet, dass** der flüssige elektrische Leiter aus einem Hydroxid, einem Nitrat, einem Nitrit oder einer Mischung dieser Salze besteht.

7. Verfahren nach einem der Ansprüche 1 bis 6, **dadurch gekennzeichnet, dass** der flüssige elektrische Leiter der Vorläufer mindestens eines Elements, das die Matrix aufbaut, ist.

8. Verfahren nach Anspruch 7, **dadurch gekennzeichnet, dass** man während des Verlaufs der Anfahrstufe dem Bad aus dem flüssigen elektrischen Leiter, dessen Temperatur allmählich erhöht wird, die die Matrix aufbauenden komplementären Elemente zugibt.

9. Verfahren nach einem der Ansprüche 1 bis 7, **dadurch gekennzeichnet, dass** man im Verlaufe der Anfahrstufe dem Bad aus dem flüssigen elektrischen Leiter, dessen Temperatur allmählich erhöht wird, die die Matrix aufbauenden Elemente zugibt und diese Zugabe kontinuierlich oder diskontinuierlich fortsetzt, indem man sie jeweils kombiniert mit einer oder mehreren kontinuierlichen oder diskontinuierlichen partiellen Entleerungen, bis die gewünschte geschmolzene mineralische Matrix erhalten worden ist.

10. Verfahren nach einem der Ansprüche 1 bis 9, **dadurch gekennzeichnet, dass** es angewendet wird zur Herstellung einer mineralischen Matrix, ausgewählt aus Gläsern, Emailles und Keramiken.

11. Verfahren nach einem der Ansprüche 1 bis 10, **dadurch gekennzeichnet, dass** es angewendet wird zur Herstellung einer Glasmatrix.

12. Verfahren nach Anspruch 11, **dadurch gekennzeichnet, dass** es im Rahmen eines Verfahrens zur Vitrifizierung von radioaktiven Abfällen angewendet wird.

13. Verfahren nach einem der Ansprüche 11 oder 12, **dadurch gekennzeichnet, dass** der flüssige elektrische Leiter Natrium, den Vorläufer von Na₂O, enthält.

14. Verfahren nach den Ansprüchen 8 und 12, **dadurch gekennzeichnet, dass** die radioaktiven Abfälle gleichzeitig mit den oder nach den, zweckmäßig gleichzeitig mit den, die Glasmatrix aufbauenden komplementären Elementen eingeführt werden.

15. Verfahren nach den Ansprüchen 9 und 12, **dadurch gekennzeichnet, dass** die radioaktiven Abfälle in die gewünschte geschmolzene Glasmatrix eingeführt werden.

## Claims

1. A process for preparing a mineral matrix by melting, which is implemented according to the method of direct cold crucible induction melting, said method comprising an initiation step for initiating the melting, **characterised in that** during said initiation step, a conductive mineral load is generated, by introduction of constituent elements of said matrix, into a bath of a conductive liquid, brought by induction to a suitable temperature, in said cold crucible ; said intervening conductive liquid having the property of being liquid and an electric conductor between a temperature θ₁ of less than 600°C, advantageously of between 100 and 500°C, and a temperature θ₂ at least equal to the temperature at which the constituent elements of said matrix melt to generate said matrix.

2. The process according to claim 1, **characterised in that** said bath of conductive liquid has been generated *in situ* in said cold crucible.

3. The process according to claim 1, **characterised in that** said cold crucible has been fed directly with said conductive liquid.

4. The process according to any one of claims 1 to 3, **characterised in that** said conductive liquid is a molten salt or a mixture of molten salts.

5. The process according to claim 4, **characterised in that** said conductive liquid is a molten alkaline salt or a mixture of molten alkaline salts.

6. The process according to claim 5, **characterised in that** said conductive liquid consists of a hydroxide, a nitrate, a nitrite, or a mixture of these salts.

7. The process according to any one of claims 1 to 6, **characterised in that** said conductive liquid is a precursor of at least one constituent element of said matrix.

8. The process according to claim 7, **characterised in that** during said initiation step, the additional constituent elements of said matrix are added into said bath of conductive liquid, the temperature of which is progressively increased.

9. The process according to any one of claims 1 to 7, **characterised in that** during said initiation step, the constituent elements of said matrix are added into said bath of conductive liquid, the temperature of which is progressively increased, and this addition is continued, continuously or discontinuously, in associating with it, respectively, a continuous partial drainage or discontinuous partial drainages, until the molten mineral matrix sought after is obtained.

10. The process according to any one of claims 1 to 9, **characterised in that** it is implemented for preparing a mineral matrix selected from glasses, enamels, and ceramics.

11. The process according to any one of claims 1 to 10, **characterised in that** it is implemented for preparing a glass matrix.

12. The process according to claim 11, **characterised in that** it is implemented within the context of a process of vitrifying radioactive waste materials.

13. The process according to one of claims 11 or 12, **characterised in that** said conductive liquid contains sodium, a precursor of Na₂O.

14. The process according to claims 8 and 12, **characterised in that** said radioactive waste materials are introduced, at the same time as or after, advantageously at the same time as, the additional constituent elements of the glass matrix.

15. The process according to claims 9 and 12, **characterised in that** said radioactive waste materials are introduced into the molten glass matrix sought after.
